# EUROPEAN PATENT APPLICATION

(11) **EP 4 120 152 A2**
(43) Date of publication of application: **18.01.2023**
(21) Application number: 22202873.0
(22) Date of filing: 21.10.2022
(51) Int. Cl.: G06Q 10/00

(54) **INTELLIGENT OFFICE SYSTEM, METHOD FOR MANAGING WORK TASKS AND STORAGE MEDIUM**

(30) Priority: 27.10.2021 CN 202111257854
(71) Applicant: Beijing Baidu Netcom Science Technology Co., Ltd., Beijing 100085 (CN)
(72) Inventor: Wang, Haiwei, Beijing, 100085 (CN); Wang, Baowei, Beijing, 100085 (CN); Hao, Xuejiao, Beijing, 100085 (CN); Yin, Lingyi, Beijing, 100085 (CN); Liu, Yang, Beijing, 100085 (CN)
(74) Representative: Maiwald GmbH

(57) **Abstract**

Disclosed are an intelligent office system, a method for managing work tasks and a storage medium, which relate to a field of intelligent office technologies. The system includes an application layer, an engine layer and a system layer. The application layer creates work cards for tasks acquired from application systems, stores each work card into the system layer by calling the engine layer; acquires changing information of each work card, and updates each work card that has been stored in the system layer by calling the engine layer. In response to the calling, the engine layer sends the created work cards and the changing information of each work card to the system layer for storage and update. The system layer stores information of each work card. The unified management of work tasks is achieved by breaking the boundary between different application systems with the work cards as carriers.

## Description

### TECHNICAL FIELD

The invention relates to a field of computer technologies, and particularly to an intelligent office technology.

### BACKGROUND

At present, since many enterprises have many complex work tasks, the work tasks need to be managed.

### SUMMARY

The invention provides an office system for unified management to tasks of different systems, a method and an apparatus for managing work tasks, a device and a storage medium.

According to a first aspect of the invention, an intelligent office system includes: an application layer, configured to create work cards for work tasks acquired from application systems, and store each work card into a system layer by calling an engine layer; acquire changing information of each work card, and update each work card that has been stored in the system layer by calling the engine layer; the engine layer, configured to in response to being called by the application layer, send the created work card and the changing information of each work card to the system layer for storage and update; and the system layer, configured to store information of each work card.

According to a second aspect of the invention, a computer-implemented method for managing a work task includes: acquiring task information of work tasks from application systems; creating work cards for work tasks for storage; and acquiring changing information of each work card, and updating information of each work card that has been stored.

According to a third aspect of the invention, a non-transitory computer readable storage medium stored with computer instructions is provided, the computer instructions are configured to perform the method for managing a work task as described in the first aspect by a computer.

The invention may achieve unified management of different work tasks by breaking the boundary between different application systems with the work cards as carriers.

It should be understood that, the content described in the part is not intended to identify key or important features of embodiments of the invention, nor intended to limit the scope of the invention. Other features of the invention will be easy to understand through the following specification.

### BRIEF DESCRIPTION OF THE DRAWINGS

The drawings are intended to better understand the solution, and do not constitute a limitation to the invention.
FIG. 1 is a diagram of an office system according to a first embodiment of the invention.
FIG. 2 is a diagram of an office system according to a second embodiment of the invention.
FIG. 3 is a diagram of an office system according to a specific example of the invention.
FIG. 4 is a diagram of an office system according to an application example of the invention.
FIG. 5 is a diagram of a method for managing work tasks according to a first embodiment of the invention.
FIG. 6 is a diagram of a method for managing work tasks according to a second embodiment of the invention.
FIG. 7 is a diagram of an apparatus for managing work tasks according to a first embodiment of the invention;
FIG. 8 is a block diagram illustrating an electronic device configured to achieve a method for managing work tasks in the embodiment of the invention.

### DETAILED DESCRIPTION

The embodiments of the present invention are described as below with reference to the accompanying drawings, which include various details of embodiments of the present invention to facilitate understanding, and should be considered as merely exemplary. Similarly, for clarity and conciseness, descriptions of well-known functions and structures are omitted in the following descriptions.

The terms "module," "sub-module," "circuit," "sub-circuit," "circuitry," "sub-circuitry," "unit," or "sub-unit" may include memory (shared, dedicated, or group) that stores code or instructions that can be executed by one or more processors. A module may include one or more circuits with or without stored code or instructions. The module or circuit may include one or more components that are directly or indirectly connected. These components may or may not be physically attached to, or located adjacent to, one another.

A unit or module may be implemented purely by software, purely by hardware, or by a combination of hardware and software. In a pure software implementation, for example, the unit or module may include functionally related code blocks or software components that are directly or indirectly linked together, so as to perform a particular function.

For unified management to tasks of different systems, the invention provides an office system, a method and an apparatus for managing work tasks, an electronic device and a storage medium. In some embodiments, the office system may be implemented by a computer.

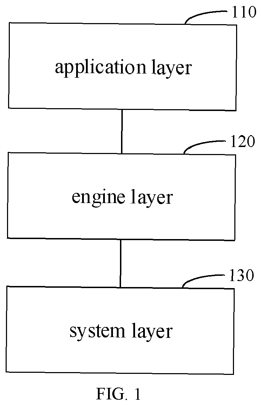

As illustrated in FIG. 1, FIG. 1 is a diagram of an intelligent office system according to a first embodiment of the invention. The system may include an application layer 110, an engine layer 120 and a system layer 130.

The application layer 110 may be configured to create different work cards for different work tasks based on task information of different work tasks acquired from different application systems, and store each work card into the system layer by calling the engine layer; acquire changing information of each work card, and update each work card that has been stored in the system layer by calling the engine layer.

The engine layer 120 may be configured to send the created work cards and the changing information of each work card to the system layer for storage and update, in response to the calling of the application layer.

The system layer 130 may be configured to store the changing information of each work card.

The office system according to the embodiment of the invention includes an application layer, an engine layer and a system layer. The application layer is configured to create different work cards for different work tasks based on task information of different work tasks acquired from different application systems, and store each work card into the system layer by calling the engine layer; acquire the changing information of each work card, and update each work card that has been stored in the system layer by calling the engine layer. The embodiment of the invention is applied to achieve unified management of the work tasks by breaking the boundary between different application systems with the work cards as carriers.

In the embodiment of the invention, the work cards created for a user may include information in different platforms and different application systems. The platforms may include a development collaborative platform, an objectives and key results (OKR) platform, etc.

As an implementation in the embodiment of the invention, the user may set respective labels for the work cards when creating the work cards, in which each of the labels may be configured to indicate a processing state of a work task corresponding to the work card, an emergency degree or importance degree of the corresponding work task, etc. The labels may be stored in the above system layer.

In the embodiment of the invention, the application layer may achieve a part of functions based on an instant messaging (IM). The IM is an instant messaging system that may support one-to-one communication between users and may support communication among a plurality of users (for example, a session group). The user may achieve dialogue, information exchange with other users based on the IM application. As an implementation in the embodiment of the invention, a "work card creation" icon may be displayed on an interface of the IM application. The user clicks the icon to start creating a work card. In addition, the application layer may achieve sending and sharing the work card to a single person or a session group via the IM application, etc.

The engine layer may be a program to be called by the application layer. The corresponding work card creation may be performed by calling one or more related program.

In the embodiment of the invention, the application layer may include different application systems that may be used in the user work, for example, a comment system, an attachment system, and a label system. The comment system may store subjects, pictures and other information of various comment, and may also store a response relationship between the comments. The response relationship between the comments may be a correlation relationship between a comment sent by a reviewer and messages that are reviewed. The attachment system may store and manage attachments uploaded by multiple people. The attachments may include documents, Excels, images, and other resources that may be collaboratively edited. The label system may store labels of works cards.

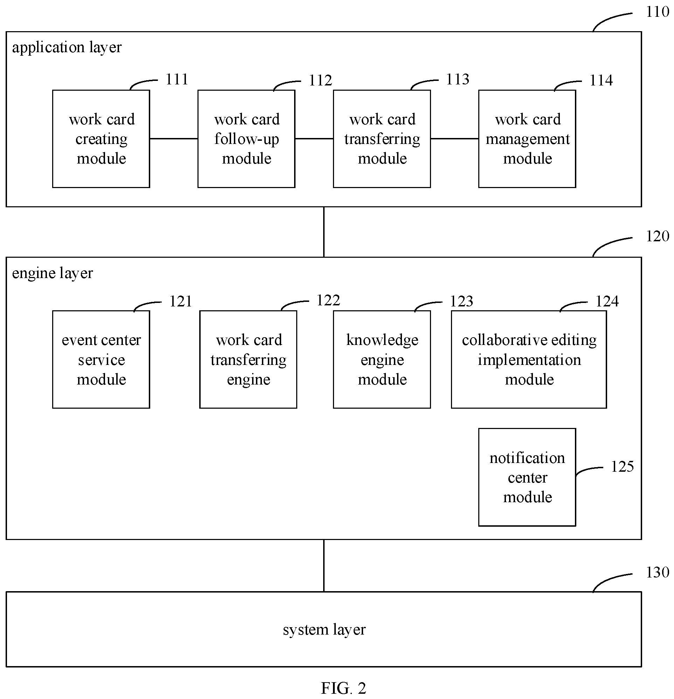

In an embodiment of the invention, as illustrated in FIG. 2, the application layer 110 may include a work card creating module 111 and a work card follow-up module 1121. The engine layer may include an event center service module 121. The work card creating module 111 may be configured to create the different work cards for each work task based on the task information of different work tasks acquired from different application systems, and store each work card into the system layer by calling the event center service module 121 in the engine layer.

As described above, the system layer includes a plurality of application systems that may be used by the user in work. Therefore, as an implementation of the embodiment of the invention, a software development kit (SDK) interface may be embedded in each application system, and information in the application system may be acquired by the SDK interface. In the embodiment of the invention, the SDK interfaces may adopt the same format to facilitate the user to select documents, pictures and other resources from each application system and create corresponding work cards.

As an implementation, the IM application may output a prompt message and inquire the user whether to create a work card when the user selects one sentence or a piece of content.

In other embodiments of the invention, the work card creating module 11 may be further configured to receive work cards sent by different application systems, and store each work card into the system layer by calling the event center service module in the engine layer.

Generally speaking, in the actual work, many works are jointly completed by a plurality of users. As mentioned above, after the user creates the work cards, the application layer may store the work cards into a corresponding data content system in the system layer by calling the engine layer. Therefore, in the embodiment of the invention, after the user completes one work task, other work cards related to the work task that have been stored into the system layer may be sent to the user, and the other work cards related to the work task may be created by other users. As an implementation, the other work cards stored into the system layer may be sent to the user, in response to determining that the user has a permission of processing these work tasks based on a permission system in the system layer for storing permission data. Also, the other work cards may also be sent to the user by other users through the IM application.

The work card is initiatively sent to the user by the office system, so that the user who just starts to process the work task may understand various processing conditions of the processed work task, which improves the working efficiency.

The work card follow-up module 112 in FIG. 2 may be configured to acquire changing information of each work card and store the changed work card into the system layer by calling the event center service module 121 in the engine layer.

In the embodiment of the invention, after the work card is created and stored into the system layer, the office system may allow multiple people to edit the work card, make comments to the work card, make response to the work card and upload attachments to the work card. As described above, different application systems may send the work card for the work task to the relevant user of the work task. Therefore, as a implementation, the relevant user may process tasks based on the work card received and edit the work card, thus achieving edition of the work card by multiple people.

In the embodiment of the invention, the changing information of the work card may include specific content of editing the work card, making comments to the work card, making response to the work card and uploading attachments to the work card, and other operations on the work task by the user, and may also include user identity information (for example, a work account ID of the user) for performing the above operations on the work task. The information is stored with the corresponding work card into the system layer.

It can be seen that, in the embodiment of the invention, the work card may record a whole process flow (context) of the work task, a work state and other information. Therefore, operation trace-back may be supported, that is, an operation and user information for performing the operation are acquired, which facilitates the user to collaboratively solve the problem and enhance the working efficiency.

In an embodiment of the invention, as illustrated in FIG. 2, the application layer 110 in FIG. 1 may further include a work card transferring module 113 and/or a work card management module 114. The engine layer 120 may further include a work card transferring engine 122. The work card transferring module 113 is configured to transfer the work card to an associated application system or group by calling the work card transferring engine 122 in the engine layer based on a user operation; and/or create an associated work card based on the work card information and transfer the associated work card to an associated system or group.

As described above, in the embodiment of the invention, the application layer may be based on IM (instant messaging). Therefore, as an implementation of the embodiment of the invention, the above IM application may display work cards created and received by the user. When one issue (event item) needs to be followed up or completed in another service system or group session, the user may forward/transfer the corresponding work card into the associated service system or group session.

As another implementation, in the embodiment of the invention, the work card also may be transferred to other service systems or session groups by creating an associated work card based on a work card to be transferred, and the associated work card may contain all information in the work card to be transferred. As an implementation, the user may set a label for the associated work card, and store the associated work card into the system layer. The label may include a service system to which the associated work card needs to be sent, each user in the service system or session group information (for example, a session group ID) to be sent. The work card may be sent to the corresponding user or session group based on the label of the associated work card stored into the system layer. For example, the work task corresponding to the work card is writing program codes, and the user may modify the state of the work card into "completed" when completing the program writing. When the next work task is a program testing based on the work flow, an associated work card may be created, and a work task corresponding to the associated work card is the program testing.

As an implementation of the embodiment of the invention, a sharing range may be set for the work card and stored into the system layer, for example, a visible range, editable users, etc. of the work card may be set. Therefore, when the user shares the work card to other users, the permission of the user on the work task may be checked first. When the user does not have the permission of viewing the work card, the user may be first allowed to have the permission of viewing the work card and the work card is then sent to the user, or the work card may not be sent to the user.

It can be seen that, in the embodiment of the invention, information sharing and alignment across service systems and groups, and collaborative processing the work tasks may be achieved by forwarding the work cards and creating the associated work cards, etc. The efficiency of collaborative work may be improved by simplifying the information sharing operation.

The work card management module 114 is configured to acquire work card information associated with a user from the system layer 130 and display the work card information to the user through a personal board of the user; and receive a user edition to the displayed work card and store the edited work card into the system layer 130 by calling the event center service module 121 in the engine layer 120.

In the embodiment of the invention, displaying the personal board of the user may be added in the IM application interface. The work cards of the user and association between the work cards may be displayed in the personal board, and the work cards may be also displayed in a sequence such as, the time sequence and the importance sequence from high to low. The importance of the work cards may be obtained from the labels set by the user for the work cards. The user may edit and view the work cards on the personal board interface, and may also arrange the work tasks based on the work cards displayed on the board.

By displaying the work card state to the user on the personal board of the user, it may help the user achieve the system management of the personal work, and the user may manage each work task by combining the labels, the time axis and the association relationship between the work cards, which reduces information loss and repetition, and improves the information processing efficiency of the user.

In the embodiment of the invention, as illustrated in FIG. 2, the engine layer 120 in FIG. 1 further may include a knowledge engine module 123.

The knowledge engine module 123 is configured to: extract knowledge from information of each work card stored into the system layer 130, and store the extracted knowledge into the system layer 130; in response to being called by any module in the application layer 110, generate recommendation information based on information provided by the any module in the application layer and the knowledge stored into the system layer, and return the recommendation information to the any module in the application layer, which improves intelligence of the office system and the user experience.

In the embodiment of the invention, the knowledge engine module 123 may mine valuable information from the work through technologies such as content semantic understanding, process mining and user analysis, and apply the mined valuable information to various modules in the application layer, the engine layer and the system layer, which improves automation and intelligence of the office system, and further improve the working efficiency. For example, an optimal work card content is mined from a plurality of work cards that have been stored for the same work task, and is stored as one piece of knowledge for the work task; or an optimal transferring process is mined from the stored transferring processes of a plurality of work cards for the same work task and stored as another piece of knowledge for the work task, etc.

Specifically, in an embodiment of the invention, the work card creating module 111 further may be configured to call the knowledge engine module 123 in the engine layer in response to acquiring the task information of the work tasks; acquire the recommendation information of the work card generated by the knowledge engine module 123 based on the task information, and output the recommendation information to the user, so that the user creates the work card based on the recommendation information.

In the embodiment of the invention, the knowledge engine module may automatically predict whether to create a work card in a scene based on the semantic comprehension of the scene and the content, and actively recommend the user to create a work card. For example, semantic analysis may be performed on the content sent by the user in consideration of the content context. When progress, execution, etc. related to the work task are obtained by semantic analysis, a piece of inquiry information may be sent for inquire the user whether to create a work card.

As an implementation, the knowledge engine module may tag labels of related work attributes for the work cards based on the understanding of the work content, and recommend existing processes and work card templates related to the work attributes for the user. A subsequent work card execution process is standardized by means of the existing processes, experiences, etc., which reduces uncertainty of the work execution processes, and improves the working efficiency. Furthermore, the existing processes may be completely executed and completed by an RPA (Robotic Process Automation) technology, so as to reduce manual participation.

The work card follow-up module 112 may be further configured to call the knowledge engine module 123 in the engine layer in response to determining a work card to be changed; acquire changing recommendation information of the work card generated by the knowledge engine module 123, based on information of the work card to be changed and the knowledge stored into the system layer, for output to the user, so that the user inputs the changing recommendation information to change the work card.

As described above, information such as process information (context information) and a working link state of the entire work task may be recorded in the work card. Therefore, the knowledge engine module may recognize a work scene where the user is located based on these information content and the portrait information of the executor, infer the work intention and the target of the user, calculate and recommend to the user, the knowledge that the user may need, the person to be collaborated or the next link that needs to be transferred, so as to improve the intelligence of the office system.

The work card transferring module 113 may be further configured to call the knowledge engine module 123 in the engine layer in response to determining a work card to be transferred; acquire transferring recommendation information of the work card generated by the knowledge engine module 123, based on information of the work card to be transferred and the knowledge stored into the system layer for output to the user, so as to transfer the work card to be transferred based on the transferring recommendation information.

In the embodiment of the invention, the knowledge engine module may intelligently recommend a next action by multiplexing the process knowledge. As an implementation, each historical work process may be learned and a corresponding process template with the highest efficiency may be saved. In response to recognizing that the current work task and the task corresponding to the saved process belong to the same task, process information may be recommended to the user based on the saved process, including other service systems to be transferred, further improving the intelligence of the office system.

The work card management module 114 may be further configured to call the knowledge engine module 123 in the engine layer in response to the user editing a work card; acquire editing recommendation information of the work card generated by the knowledge engine module 123, based on information of a work card to be edited and the knowledge stored into the system layer for output to the user, so that the user edits the work card to be transferred based on the editing recommendation information.

In the embodiment of the invention, the knowledge engine module may propose a suggestion and a recommendation arrangement for the personal work arrangement of the user based on the AI capability in combination with the personal schedule of the user and his/her work cards.

For a work team, the overall work and resource allocation optimization may be performed based on the AI capability through the global aggregation management of the work cards in the organization, thus improving an input-output ratio.

In an embodiment of the invention, as illustrated in FIG. 2, the engine layer 120 in FIG. 1 further may include a collaborative editing implementation module 124.

The work card follow-up module 112 may be further configured to share the work card to a target user selected by the user, and collaboratively edit the content of the work card by calling the collaborative editing implementation module 124 in the engine layer.

The collaborative editing implementation module may be a core engine configured to drive multiple users to simultaneously operate and collaboratively edit the work card, and other users may collaboratively edit the work card received by calling the collaborative editing implementation module, which improves the collaborative working efficiency.

Further, the work card follow-up module 112 may be further configured to call the knowledge engine module 123 in the engine layer in response to determining collaborative edition to be performed; acquire a recommended target user generated by the knowledge engine module 123, based on information of a work card to be edited and the knowledge stored into the system layer for output to the user; so that the user shares the work card to the target user selected by the user based on the recommended target user.

As described above, the knowledge engine module may recognize the work scene where the user is located based on the information such as the work state in the work card and the portrait information of the executor, infer the work intention and the target of the user, calculate and recommend to the user, the knowledge that the user may need, the person to be collaborated or the next link that needs to be transferred, so as to improve the intelligence of the office system.

As illustrated in FIG. 2, in an embodiment of the invention, the engine layer 120 in FIG. 1 further may include a notification center module 125.

The notification center module 125 may be configured to generate notification information for output to the user through a corresponding module of the application layer, in response to the work card being created, changed, transferred and edited.

In the embodiment of the invention, the notification center module may achieve message communication and event contact for the user, so that different personnel may perceive the change notification, and the work cards at various places may perceive and respond to the change in time, which improves the user experience.

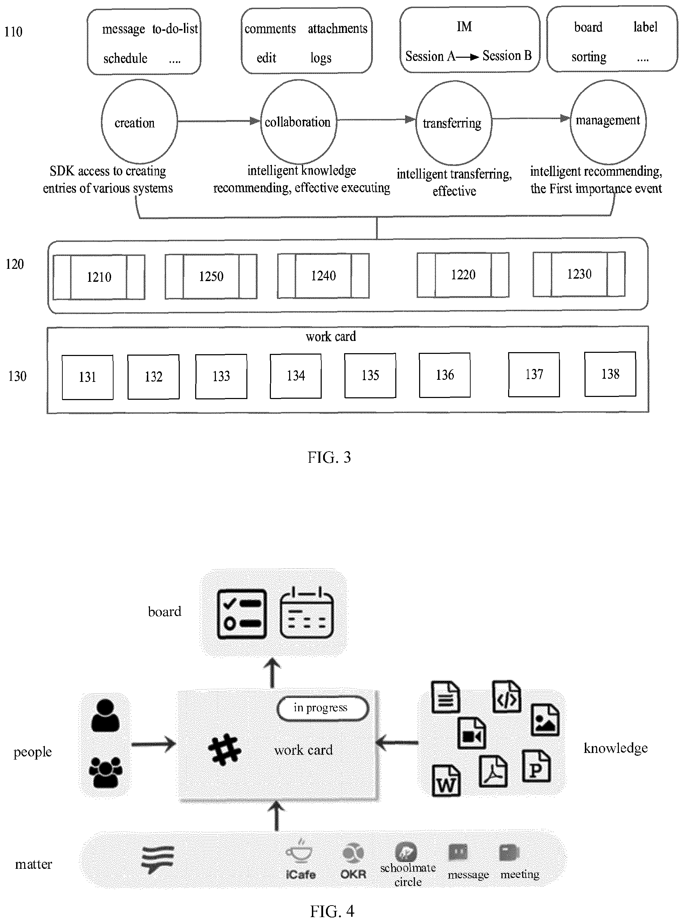

As illustrated in FIG. 3, FIG. 3 is a diagram of an office system according to a specific example of the invention. The entire system architecture, is divided into a system layer 130, an engine layer 120 and an application layer 110.

In the embodiment, the system layer 130 may include a plurality of data content systems: a work card body 131, a comment system 132, an attachment system 133, an operation log system 134, a label system 135, a transferring relationship system 136, a permission system 137 and a knowledge system 138. The comment system, the attachment system, the operation log system, the label system and the transferring relationship system are attached to the work card body.

The work card body may be configured to store information of each work card, including attributes such as subject, description, participants and time for the work card. The operation log system may store all operation logs of all people on the work card, to increase the transparency of collaborative work by multiple people. The transferring relationship system may store a transferring relationship of the work card in each group session, and may include an origin of generating the work card, a destination to which the work card is transferred, and transferring relationship at each level of the work card. The permission system may be configured to control an enterprise visible range of the work card and a limitation of participants, and an object limitation that different roles may operate various attribute information objects in the work card. The knowledge system may store and maintain the mined and externally introduced knowledge. The knowledge engine in the engine layer calls the knowledge system, and provides related services for the application layer when necessary.

The engine layer 120 may include an event center service 1210, a notification center 1250, a collaborative editing engine 1240, a transferring engine 1220 and a knowledge engine 1230.

In the embodiment, the application layer may include a work card creating module, a work card follow-up module, a work card transferring module and a work card management module to complete creation, collaborative editing, transferring and management of the work card. In a work card creating phase, the SDK may get access to various systems in the system layer to create an information entry, which facilitates to extract information in the related application system, including a work message, a to-do task, and a schedule. In a collaborative work implementation, the user may query comments, uploaded attachments, editing content, and operation logs of each user on the work card, and smart knowledge recommendation is performed in combination with the content extracted by the knowledge engine, so that the user may efficiently perform the work task. In a transferring phase, as an implementation, the work card may be transferred from a session A to a session B in the form of forwarding a work card, creating an associated card, or the like, based on the IM application. At the same time, intelligent transferring may be achieved in combination with the transferring recommendation given by the knowledge engine (such as the above recommended user ), to make information transferring more efficient. In the management of the work card, the work card may be sorted for display to the user based on the labels (importance) or the like through the personal board of the user. Intelligent recommendation may be performed in combination with information that is obtained by the knowledge engine based on the user schedule and the work card information, to provide the user with suggestions for personal work schedule, for example, important tasks to be preferentially processed ("The first important event" in FIG. 3).

In the example, the collaborative work is efficiently managed and aligned in an easy-to-use manner, which improves the online level of the work. At the same time, based on the knowledge mining capability of the knowledge engine, various knowledge such as processes is mined and extracted from the data and log in the system layer, further to achieve scene-based knowledge recommendation and auxiliary decision based on the knowledge and the AI capability in each scene of the application layer, which improves the working efficiency through intelligent assistance.

As illustrated in FIG. 4, FIG. 4 is a diagram of a work card example in an office system according to the invention.

As illustrated in FIG. 4, item information related to the work task may be written into the work card, and the above information may include office system information (for example, conference information), communication platform information (for example, a work message, information in a schoolmate circle, etc.), information in a service system such as iCafe (a development collaboration platform) and OKR (Objectives and Key Results). The information in the iCafe may include a service system involved in the work card, and the foregoing OKR is a management tool that determines and tracks a target and its completion progress, and the work card may include information such as a working link state, an operation log of the work task in the OKR.

The user may tag a label for a work card when creating a work card, and the label may be a processing state corresponding to the work task (for example, in progress), an urgency degree of the work task and an importance degree of the work task, etc. The created work card may be displayed on the personal board of the user.

In the example illustrated in FIG. 4, the work card further may be transferred in a dialogue between users and in a session group.

In addition, the knowledge engine module may also be configured to recommend related content of the work card based on AI and knowledge management, such as recommend the created work card, recommend a transferred user, and recommend a collaborative user.

In the related art, project tasks are managed by an island type BPM (Business Process Management), a project management tool, a customization system and the like, which may not meet the needs of employees for complex work; the complexity of using a task management type of system , such as Teambition and Trello is high; and a set rule needs to be configured by people due to the usage of a process trigger, with a limitation, a low flexibility, a high use threshold and lacking of intelligence. Compared with the related art, the embodiment of the invention is applied to achieve breaking the boundaries among various service systems (such as an Enterprise Resource Planning ERP system, etc.), office systems (such as an email system, a conference system, etc.), communication platforms within the enterprise, etc. with a work card as a carrier, and achieve online works and pipelining by associating, aggregating and reorganizing cross-platform work cards through correlation between labels, time axes and work cards. The work card may be quickly and efficiently transferred and associated in an enterprise based on a flow engine framework, thus achieving flexible and efficient multi-person collaboration. Based on AI and knowledge management capabilities, the flow engine has a sufficient intelligent capability, which may continuously mine knowledge such as the precipitated work process, experience and template from online works, and perform intelligent diagnosis and analysis of the work process, and may also infer the user demands through scene recognition and user analysis in the work scenes, and timely recommend knowledge, people, follow-up processes and the like required for solving the work problems, which improves the efficiency of collaborative work based on multiplexing knowledge. The boundary of the work content is broken by cross-platforms and cross-systems, which achieves seamless connection and transferring during the work collaboration, and provides sufficient intelligence for the work process through the AI capability.

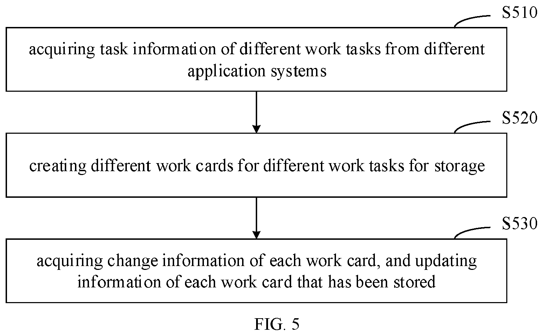

According to the embodiment of the invention, a method for managing work tasks is further provided. As illustrated in FIG. 5, the method may include the following steps at S510-S530.

At S510, task information of different work tasks is acquired from different application systems.

At S520, different work cards are created for different work tasks for storage.

At S530, changing information of each work card is acquired, and information of each work card that has been stored is updated.

In the method for managing work tasks according to the embodiment of the invention, different work cards for different work tasks are created based on task information of different tasks acquired from different application systems, and the work cards are stored, changing information of the work cards is acquired, and the work cards that have been stored are updated. The embodiment of the invention is applied to achieve unified management of work tasks by breaking the boundary between different application systems with a work card as a carrier.

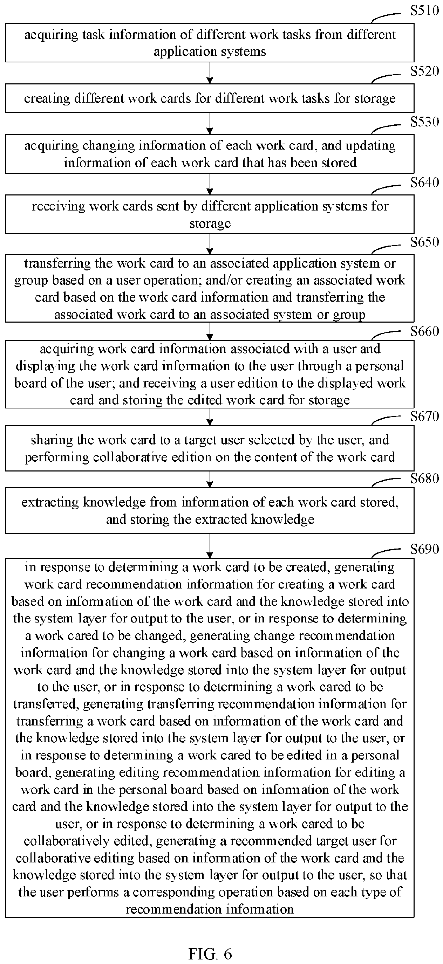

In an embodiment of the invention, based on FIG. 5, as illustrated in FIG. 6, the method for managing the work task further may include the following steps S640-S670.

At S640, work cards sent by different application systems are received for storage.

At S650, the work card is transferred to an associated application system or group based on a user operation; and/or an associated work card is created based on the work card information and the associated work card is transferred to an associated system or group.

At S660, work card information associated with a user is acquired and the work card information is displayed to the user through a personal board of the user; and a user edition to the displayed work card is received and the edited work card for storage is stored.

At S670, the work card is shared to a target user selected by the user, and collaborative edition is performed on the content of the work card.

In other embodiments of the invention, as illustrated in FIG. 2, the method for managing the work task further may include the following steps at S680-S690.

At S680, knowledge is extracted from information of each work card stored, and the extracted knowledge is stored.

At S690, in response to determining a work card to be created, work card recommendation information for creating a work card is generated based on information of the work card and the knowledge stored into the system layer for output to the user, or in response to determining a work cared to be changed, change recommendation information for changing a work card is generated based on information of the work card and the knowledge stored into the system layer for output to the user, or in response to determining a work cared to be transferred, transferring recommendation information for transferring a work card is generated based on information of the work card and the knowledge stored into the system layer for output to the user, or in response to determining a work cared to be edited in a personal board, editing recommendation information for editing a work card in the personal board is generated based on information of the work card and the knowledge stored into the system layer for output to the user, or in response to determining a work cared to be collaboratively edited, a recommended target user for collaborative editing is generated based on information of the work card and the knowledge stored into the system layer for output to the user, so that the user performs a corresponding operation based on each type of recommendation information.

The specific execution process of the above steps has been described in the above system embodiments, which is not repeated here.

According to the embodiment of the invention, an apparatus for managing work tasks is provided, and includes a task information acquiring unit 710, a work card creating unit 720 and a work card updating unit 730.

The task information acquiring unit 710 is configured to acquire task information of different work tasks from different application systems; the work card creating unit 720 is configured to create different work cards for different work tasks for storage; and the work card updating unit 730 is configured to acquire changing information of each work card, and update information of each work card that has been stored.

In the apparatus for managing work tasks according to the embodiment of the invention, different work cards for different work tasks are created based on task information of different tasks acquired from different application systems, and the work cards are stored, changing information of the work cards is acquired, and the work cards that have been stored are updated. The embodiment of the invention is applied to achieve unified management of work tasks by breaking the boundary between different application systems with a work card as a carrier.

Collection, storage, use, processing, transmission, provision and invention of the user personal information involved in the technical solution of the invention comply with relevant laws and regulations, and do not violate public order and good customs.

According to the embodiment of the invention, an electronic device, a readable storage medium and a computer program product are further according to the invention.

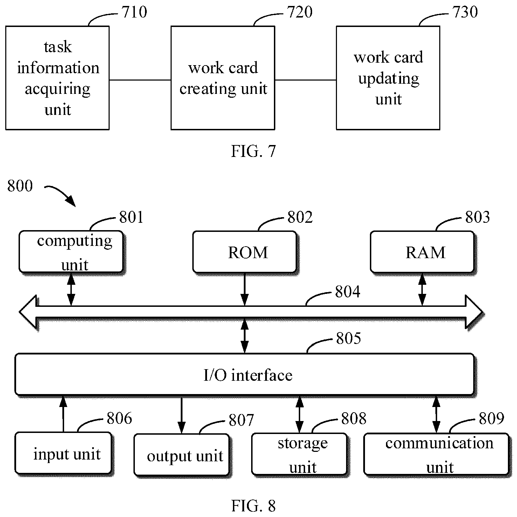

FIG. 8 illustrates a schematic block diagram of an example electronic device 800 configured to implement the embodiment of the invention. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the invention described and/or required herein.

As illustrated in Fig. 8, a device 800 includes a computing unit 801, configured to execute various appropriate actions and processes according to a computer program stored in a read-only memory (ROM) 802 or loaded from a storage unit 808 to a random access memory (RAM) 803. In a RAM 803, various programs and data required for a device 800 may be stored. A computing unit 801, a ROM 802 and a ROM 803 may be connected with each other by a bus 804. An input/output (I/O) interface 805 is also connected to a bus 804.

A plurality of components in the device 800 are connected to an I/O interface 805, and includes: an input unit 806, for example, a keyboard, a mouse, etc.; an output unit 807, for example various types of displays, speakers; a memory unit 808, for example a magnetic disk, an optical disk; and a communication unit 809, for example, a network card, a modem, a wireless transceiver. The communication unit 809 allows a device 800 to exchanging information/data through a computer network such as internet and/or various types of telecommunication networks and other devices.

The computing unit 801 may be various types of general and/or dedicated processing components with processing and computing ability. Some examples of a computing unit 801 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 801 performs various methods and processes as described above, for example, a method for managing work tasks. For example, in some embodiments, the method for managing work tasks may be further achieved as a computer software program, which is physically contained in a machine readable medium, such as a storage unit 808. In some embodiments, a part or all of the computer program may be loaded and/or installed on the device 800 via a ROM 802 and/or a communication unit 809. When the computer program is loaded on a RAM 803 and executed by a computing unit 801, one or more steps in the method for managing work tasks may be performed. Alternatively, in other embodiments, a computing unit 801 may be configured to perform a method for managing work tasks in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, the one or more computer programs may be executed and/or interpreted on a programmable system including at least one programmable processor, the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present invention may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the invention, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with a user, the systems and technologies described here may be implemented on a computer, and the computer has: a display apparatus for displaying information to a user (for example, a CRT (cathode ray tube) or a LCD (liquid crystal display) monitor); and a keyboard and a pointing apparatus (for example, a mouse or a trackball) through which the user may provide input to the computer. Other types of apparatuses may be further configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, and further may be a server of a distributed system, or a server in combination with a blockchain.

It should be understood that, various forms of procedures shown above may be configured to reorder, add or delete blocks. For example, blocks described in the invention may be executed in parallel, sequentially, or in different orders, as long as the desired result of the technical solution disclosed in the present invention may be achieved, which will not be limited herein.

The above specific implementations do not constitute a limitation on the protection scope of the invention.

## Claims

1. An intelligent office system, comprising:
an application layer (110), configured to create work cards for work tasks acquired from application systems, and store each work card into a system layer by calling an engine layer; acquire changing information of each work card, and update each work card that has been stored in the system layer by calling the engine layer;
an engine layer (120), configured to in response to being called by the application layer, send the created work cards and the changing information of each work card to the system layer for storage and update; and
the system layer (130), configured to store information of each work card.

2. The system of claim 1, wherein the application layer comprises a work card creating module (111) and a work card follow-up module (112), and the engine layer comprises an event center service module (121);
the work card creating module is configured to create the work cards for the work tasks acquired from application systems, and store each work card into the system layer by calling the event center service module in the engine layer; and
the work card follow-up module is configured to acquire the changing information of each work card and store the updated work card into the system layer by calling the event center service module in the engine layer.

3. The method of claim 2, wherein,
the work card creating module is further configured to receive the work cards sent by application systems, and store each work card into the system layer by calling the event center service module in the engine layer.

4. The method of claim 2, wherein,
the application layer further comprises at least one of a work card transferring module (113) and a work card management module (114); the engine layer further comprises a work card transferring engine (122);
the work card transferring module is configured to perform at least one of, by calling the work card transferring engine in the engine layer in response to a user operation, transferring the work card to an associated application system or group; and creating an associated work card based on information of a work card to be transferred and transferring the associated work card to an associated system or group;
the work card management module is configured to acquire information of a work card associated with a user from the system layer and display the information of the work card associated with the user on a personal board of the user; and receive a user edition to the displayed work card and store the edited work card into the system layer by calling the event center service module in the engine layer.

5. The system of claim 4, wherein the engine layer further comprises one of:
a knowledge engine module (123), configured to extract knowledge from the information of each work card stored into the system layer, and store the extracted knowledge into the system layer; in response to being called by any module in the application layer, generate recommendation information based on information provided by the any module in the application layer and the knowledge stored into the system layer, and return the recommendation information to the any module in the application layer;
a notification center module (125), configured to generate notification information for output to the user through a corresponding module of an application layer, in response to the work card being created, changed, transferred and edited.

6. The system of claim 5, wherein the work card creating module is further configured to:
call the knowledge engine module in the engine layer in response to acquiring the task information of the work tasks;
acquire the recommendation information generated by the knowledge engine module based on the task information, for output to the user and creating the work card based on the recommendation information.

7. The system of claim 5, wherein the work card follow-up module is further configured to:
call the knowledge engine module in the engine layer in response to determining a work card to be changed;
acquire changing recommendation information of the work card generated by the knowledge engine module, based on information of the work card to be changed and the knowledge stored into the system layer, for output to the user and changing the work card based on the changing recommendation information.

8. The system of claim 5, wherein the work card transferring module is further configured to:
call the knowledge engine module in the engine layer in response to determining a work card to be transferred;
acquire transferring recommendation information of the work card generated by the knowledge engine module, based on information of the work card to be transferred and the knowledge stored into the system layer, for output to the user and transferring the work card to be transferred based on the transferring recommendation information.

9. The system of claim 5, wherein the work card management module is further configured to:
call the knowledge engine module in the engine layer in response to the user editing a work card;
acquire editing recommendation information of the work card generated by the knowledge engine module, based on information of a work card to be edited and the knowledge stored into the system layer, for output to the user and editing the work card to be transferred based on the editing recommendation information.

10. The system of claim 5, wherein,
the engine layer further comprises a collaborative editing implementation module (124); and
the work card follow-up module is further configured to share the work card to a target user selected by the user, and call the collaborative editing implementation module in the engine layer to perform collaborative edition on the work card.

11. The system of claim 10, wherein the follow-up module is further configured to:
call the knowledge engine module in the engine layer in response to determining collaborative edition to be performed;
acquire a recommended target user generated by the knowledge engine module, based on information of a work card to be edited and the knowledge stored into the system layer, for output to the user and sharing the work card to the recommended target user.

12. A computer-implemented method for managing work tasks, comprising:
acquiring (S510) task information of work tasks from application systems;
creating (S520) work cards for work tasks for storage; and
acquiring (S530) changing information of each work card, and updating information of each work card that has been stored.

13. The method of claim 12, further comprising:
receiving (S640) work cards sent by application systems for storage;
transferring (S650) the work card to an associated application system or group in response to a user operation; and/or creating an associated work card based on information of a work card to be transferred and transferring the associated work card to an associated system or group; and
acquiring (S660) work card information associated with a user and displaying the work card information associated with the user on a personal board of the user; and receiving a user edition to the displayed work card and storing the edited work card for storage; and
sharing (S670) the work card to a target user selected by the user, and performing collaborative edition on the content of the work card.

14. The method of claim 13, further comprising:
extracting (S680) knowledge from the information of each work card stored, and storing the extracted knowledge; and
in response to determining a work card to be created, generating (S690) work card recommendation information for creating a work card based on information of the work card to be created and the knowledge stored into the system layer for output to the user, or
in response to determining a work cared to be changed, generating (S690) change recommendation information for changing a work card based on information of the work card to be changed and the knowledge stored into the system layer for output to the user, or
in response to determining a work cared to be transferred, generating (S690) transferring recommendation information for transferring a work card based on information of the work card to be transferred and the knowledge stored into the system layer for output to the user, or
in response to determining a work cared to be edited in a personal board, generating (S690) editing recommendation information for editing a work card in the personal board based on information of the work card to be edited and the knowledge stored into the system layer for output to the user, or
in response to determining a work cared to be collaboratively edited, generating (S690) a recommended target user for collaborative editing based on information of the work card to be collaboratively edited and the knowledge stored into the system layer for output to the user.

15. A non-transitory computer readable storage medium stored with computer instructions, wherein, the computer instructions are configured to cause a computer to perform the method of any one of claims 12 to 14.
